# EUROPEAN PATENT APPLICATION

(11) **EP 2 421 243 A1**
(43) Date of publication of application: **22.02.2012**
(21) Application number: 10173586.8
(22) Date of filing: 20.08.2010
(51) Int. Cl.: H04N 5/00, G06K 19/077, H04N 5/64

(54) **Method for assembly of a housing for an interface device comprising a conditional access module**

(71) Applicant: SmarDTV S.A., 1033 Cheseaux-sur-Lausanne (CH)
(72) Inventor: LAMBERT, Marc, 13390 Auriol (FR); MUNIER, Jean-Christophe, 83740 La Cadière d'Azur (FR)
(74) Representative: Leman Consulting S.A.

(57) **Abstract**

The present invention provides method for assembling a housing for a conditional access module complying with a PCMCIA Standard. The housing comprises a top case and a bottom case and the housing is assembled by sliding a set of tabs on the top cover into a set of cooperating tabs in the bottom cover.

## Description

### INTRODUCTION

The present invention relates to the mechanical aspects related to the assembly of an interface device to connect an electronic chip on a chip card to a computing device such as a digital television multimedia unit, a television set, a personal computer or the like, especially when such interface includes conditional access functionality. More precisely, the invention relates to assembly techniques in the manufacture of such interface devices.

### STATE OF THE ART

Various different types of multimedia apparatus such as digital TV decoders, TV sets having integrated digital receivers, personal computers etc. may be used to extract and decode audio/visual data for display on an appropriate viewing apparatus such as a TV display or a personal computer display or other suitable device. It is common for the audio/video data to be protected against non-authorised access, such access being subject to the payment of a fee and such protection being imparted by encrypting the audio/video data according to a pre-determined conditional access policy. The multimedia apparatus usually comprises a conditional access module (CAM) configured to allow a user having paid for access to the audio/visual data to decrypt the encrypted audio/visual data. An important characteristic of a conditional access module is that it must be secure. Security is assured by a combination of the use of strong cryptographic techniques, tamperproof hardware and the use of secure communication protocols. The security is implemented on the CAM itself and in a security module which is usually detachable from the CAM hardware and which is used to store secret keys and to do secure cryptographic functions. In most state of the art conditional access systems the CAM module and the security device are generally mechanically tamperproof and are sealed to prevent access. For example, the Nagra On-Chip Security Technology (NOCS) uses robust encryption and decryption engines, software integrity checks, tamper protection and unique chip Identification numbers to ensure a high level of security.

The conditional access module is generally provided by a pay-TV operator and is adapted to decrypt audio/video data usually arriving in the form of digital data streams from a terrestrial transmitter, a satellite, an internet server, a cable network or a wireless network etc. Along with the audio/video content, the pay-TV operator or provider also makes available the keys or control words necessary to decrypt the content using the conditional access module (CAM), the keys or control words being provided in encrypted format. A security module, reputed to be tamperproof and secure, is provided to the user for storing security information such as keys and rights necessary for authentication and to allow the conditional access module (CAM) to proceed with decryption. The security module usually is in the form of an electronic chip housed on a chip card which can be inserted into a card reader of the conditional access module (CAM). The security module is thus said to be detachable.

An interface device, or contact unit, equipped with a chip card reader is usually provided to allow the user to provide the conditional access module (CAM) with the appropriate authorisation data such as rights and keys from the detachable security module. The interface device usually takes the form of a detachable box of standardised dimensions, such as a PCMCIA module.

United States Patent Application Publication Number 2003/1041365 A1 describes such an interface device. It is a chip card reader comprising a housing including a base plate and a cover plate extending between a plug-in socket and an insertion slot for a chip card. The cover plate and the base plate are each made of metal and plastic and are formed by moulding the plastic onto the metal. The two plates are welded together to make a tamperproof housing. This is in keeping with all PCMCIA conditional access modules in the prior art since it is generally considered desirable to have a tamperproof housing.

However, as will be discussed in the following description, there is cause to reconsider the principle of favouring tamperproof housings as security strategies for conditional access modules (CAMs) have evolved. Indeed there are certain advantages to be realised in the manufacturing process of such PCMCIA CAMs which benefit from a reasoned reconsideration of the generally accepted old practice of having a tamperproof housing.

### BRIEF SUMMARY OF THE INVENTION

In view of the problems associated with the manufacturing of interface devices comprising a conditional access module and to render the process more cost-effective and material-efficient, the present invention provides a method for assembling a housing for an interface device comprising a conditional access module, the conditional access module being suitable for performing secure operations, said method using a top cover and a bottom cover, said bottom cover comprising at least two bottom cover tabs, said top cover comprising at least two top cover tabs adapted to interlock with the bottom cover tabs, said method comprising:
interlocking the top cover tabs with the bottom cover tabs using a sliding action of the top cover tabs into the slits of the bottom cover tabs to assemble the housing.

The invention also provides for a method for non-destructively disassembling a housing for an interface device comprising a conditional access module, said housing comprising a top cover and a bottom cover, said bottom cover comprising at least two bottom cover tabs, said top cover comprising at least two top cover tabs interlocked with the bottom cover tabs, said method comprising:
detaching the top cover tabs from the bottom cover tabs using a sliding action of the top cover tabs away from the bottom cover tabs.

The invention further provides a housing for a conditional access module, the conditional access module being suitable for performing secure operations, said housing comprising a top cover and a bottom cover, said housing characterised in that:
the top cover comprises at least two top cover tabs distributed evenly on opposite edges of the top cover, said top cover tabs having a first section substantially perpendicular to a plane of the top cover and a second section substantially perpendicular to the first section of the top cover tabs and lying beneath the top cover, and in that:
   the bottom cover comprises at least two hooked tabs corresponding to the top cover tabs, said hooked tabs having a first section and a second section, said first section being substantially perpendicular to the bottom cover, said second section forming a hook, an extremity of the hook facing the bottom cover, said hooked tabs each having at least one slit in the first section,
   said top cover tabs being interlocked into the slits in the hooked tabs,
   said housing further characterised in that it is adapted such that the top cover may be disassembled from the bottom cover in a non-destructive manner.

Furthermore, the invention provides an interface device comprising the housing above, said interface device further comprising:
a frame;
a printed circuit board; and
a connector panel,
said connector panel being adapted to provide an interface between the printed circuit board and a host device,
said interface device characterised in that:
   the frame comprises:
      at least two grooves, a first groove corresponding to a first of said two hooked tabs, a second groove corresponding to a second of said two hooked tabs, said grooves adapted to fit into the hooked tabs, and
      at least two lips, a first lip corresponding to the first groove, a second lip corresponding to the second groove,
      said lips being adapted such that said top cover tabs may slide
      underneath said lips,
and in that:
   said printed circuit board fits beneath the frame; and
   said frame is held within the housing by a combined action of the extremities of the hooked tabs pulling in a first direction on the grooves of the frame and the top cover tabs pulling in a second direction, substantially opposite to the first direction, on the lips of the frame.

### BRIEF DESCRIPTION OF THE DRAWINGS

The present invention will be better understood thanks to the detailed description which follows and the accompanying drawings, which are given as non-limiting examples of embodiments of the invention, namely:
Fig. 1 illustrates a chip card and its corresponding interface device.
Fig. 2a, 2b and 2c show cross-sectional details of different embodiments of interface devices with their chip cards inserted.
Fig. 3 illustrates an interface device in which an embodiment of the present invention is deployed.
Fig. 4 shows different views of components comprised in a preferred embodiment of the present invention.
Fig. 4a, 4b, 4c and 4d show detailed views of a selection of different parts of the components comprised in a preferred embodiment of the present invention.

### DETAILED DESCRIPTION

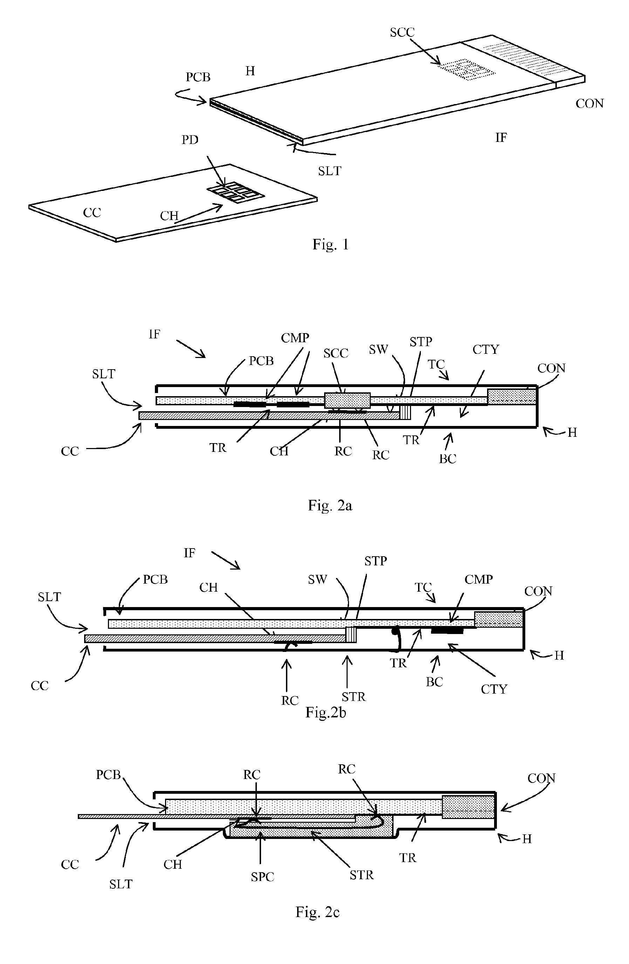

Fig. 1 shows a chip card (CC) with its electronic chip (CH) having a plurality of contact pads (PD) and an example of an interface device (IF) complying with the PCMCIA Standard dimensions. The interface device (IF) comprises a printed circuit board (PCB) located within a housing (H). The housing (H) is open at one end and forms a slot (SLT) through which the chip card (CC) may be inserted and closed at the other end by a connector panel (CON). The printed circuit board (PCB) is connected to the connector panel (CON) and it includes a smartcard connector (SCC) adapted to make contact with the electronic chip (CH) when the chip card (CC) is inserted into the slot (SLT) in the housing (H). Thanks to the connector panel (CON) the interface device (IF) can be plugged into a host device to serve as an interface between the electronic chip (CH) and the host device.

Fig. 2a shows a cross-sectional view of another interface device (IF). A chip card (CC) is also included in the figure. The interface device (IF) comprises a housing (H) of a format whose physical dimensions comply with those specified in the PCMCIA Standard for plug-in cards. The housing (H) may be made of a top cover (TC) and a bottom cover (BC), suitably attached to each other to form a cavity (CTY) within the housing (H). By suitably attached it is understood, at least for prior art conditional access modules, that the top cover and the bottom cover of such housings are permanently attached, either by welding, soldering or gluing for example. However, as will be described below, according to a preferred embodiment of the present invention, the top cover and the bottom cover are attached in a manner which allows them to be easily and non-destructively detached from one another. One end of the housing (H) is closed off by a connector panel (CON) designed to make contact between the interface device (IF) and a host device such as a computer, a multimedia unit or the like, having an accommodation channel to receive the PCMCIA-format interface device (IF). The accommodation channel has a socket at its end for connecting to the connector panel (CON) once the interface device (IF) is inserted into the accommodation channel. The other end of the housing (H) is open and forms a slot (SLT) of appropriate dimension to receive a chip card (CC) into the cavity (CTY) formed between the top cover (TC) and the bottom cover (BC). Within the housing (H) there is a printed circuit board (PCB), connected to the connector panel (CON). The printed circuit board (PCB) is disposed within the cavity (CTY) in such a way as to leave a space between the bottom cover (BC) and the printed circuit board (PCB). The space is of sufficient dimension for the chip card (CC) to be able to be inserted at least part of the way into the cavity (CTY) via the slot (SLT). The depth to which the chip card (CC) may be inserted may be dictated using a suitably disposed card stop (STP) within the cavity (CTY) to limit the travel of a chip card (CC) once inserted into the slot (SLT). A means for detecting the presence of the chip card (CC) may also be included, usually via detector switches (SW) placed on the printed circuit board (PCB), the switches (SW) being activated by the chip card (CC) as it makes its way towards the limit of its travel.

The printed circuit board (PCB), also shown in Fig. 2a, comprises a smart card connector (SCC) having a set of resilient contacts (RC). The resilient contacts (RC) are connected to conductive tracks (TR) on the printed circuit board (PCB) and these conductive tracks (TR) may be connected either directly to any of the connections on the connection panel (CON) or via any number of passive or active electronic components (CMP) designed to serve a particular predetermined function. Other conductive tracks (TR) may be incorporated on the printed circuit board (PCB) to form connections between the electronic components (CMP) or from an electric component (CMP) to the connection panel (CON). For example in the case where the interface device (IF) serves as a conditional access module (CAM) having decryption capabilities, such electronic components (CMP) and the conductive tracks (TR) may be configured to form an interface with the electronic chip (CH), realise the required decrypting function and communicate with the host device via the connection panel (CON).

As is generally known, a chip card (CC) usually takes the physical form of a standard credit card and it has an electronic chip (CH) embedded, usually near one corner. Electrical connection to the electronic chip is achieved via a set of contact pads (PD). The contact pads (PD) appear on a face of the chip card and preferably do not coincide with any edges of the card. A chip card (CC) with its electronic chip (CH) is illustrated in Fig. 1 and in Fig. 2a. The chip (CH) has a plurality of terminals through which electronic communication may be achieved. In one embodiment such communication is via hard-wired connections, whereas is another embodiment the communication could be wireless. In the embodiment using hard-wired connections, the plurality of terminals is connected to a set of a plurality of contact pads (PD) on a surface of the chip card (CC). When the chip card (CC) is inserted into the cavity (CTY) of the interface device (IF) via the slot (SLT), the contact pads (PD) are urged against the resilient contacts (RC) of the printed circuit board's (PCB) suitably positioned smart card connector (SCC) such that electronic contact is formed between the electronic chip (CH) and the printed circuit board (PCB).

Fig. 2b illustrates another possible embodiment of an interface device upon which an embodiment of the present invention may be deployed. As described above, an interface device (IF) comprises, among other things, a housing (H) formed by a top cover (TC) and a bottom cover (BC). This embodiment is different in that the printed circuit board (PCB) is devoid of any smart card connector (SCC). Instead, connection between the chip and the printed circuit board is made through conductive strips (STR) lying in or on the bottom cover. Again in contrast to the prior art, the assembly of the housing used for the interface device, includes attaching the top cover to the bottom cover in such a way that they may be readily and non-destructively detached from each other.

Fig. 2c shows another embodiment of an interface device, similar to the embodiment of Fig. 2b but with an insulating spacer (SPC) being added to incorporate the conductive strips (STR). It is worth noting that according to how the interface device is constructed, the housing may extend in a longitudinal direction to cover substantially the whole device as in Fig. 2a, 2b, 2c or it may stop short of the end of the connector panel as in Fig. 1. The housing is understood then to be the external casing which wraps fully around at least a part of the interface device.

Any of the above described interface devices present an opportunity for an embodiment of the present invention to be deployed.

According to the prior art in the domain of conditional access modules, every effort is made to render the module physically inaccessible. The prior art modules are usually permanently sealed using solder spots or non-detachable clips or some other such tamperproof locking mechanism. However these prior art modules present some serious inconveniences for cost efficient manufacturing of conditional access modules (CAMs), which will be outlined below.

During the process of manufacturing an interface device for a conditional access module (CAM) there is a stage in the process where the CAM is personalised. Certain encryption keys are embedded within the CAM and the CAM and the interface device are then attributed a unique number. A ticket is stuck onto the interface device, usually somewhere on the outside of the device, indicating its unique number. Since the state of the art modules are sealed, this means that when they go on to be tested, if there are any faults, then the whole module has to be thrown away. Not only does this represent a waste from the point of view of the hardware, but there is also a cost associated with the fact that keys have already been attributed at this stage and they can no longer be used since the ticket, which is also used to track the CAM hardware, is stuck onto the sealed device. If the device tests as faulty, then the whole module including the printed circuit board, the housing and the keys have to be discarded. According to the present invention, since the module is not sealed, it is still possible to repair the module should it be found to have a fault during test. Indeed, the ticket can be stuck onto the CAM hardware within the module, preferably onto the printed circuit board, since the printed circuit board will only be discarded if it is beyond repair. Since the module is repairable there is no waste - if the housing has a physical/mechanical defect, then the housing is replaced; if the printed circuit board has a fault, then it is repaired; if a component on the printed circuit board is found to be faulty it may be replaced etc. It is worth noting that in a non-sealed housing comprising a conditional access model, other types of intervention may be achieved by the manufacturer after final assembly, such as the updating of keys or the replacement of a circuit for example.

The present invention takes advantage of the fact that nowadays the high level of security designed into a conditional access module (CAM) is now focused on the software and the system design and it is no longer easy for a malicious third party to break the security simply by having access to the hardware. In spite of the historical tendency to build sealed units to house CAMs, it is thought that there is no longer any benefit achieved by a malicious third party being able to access the hardware and so it is now of benefit from a manufacturing point of view to leave the hardware accessible since having access to the hardware does not present any advantage the malicious third party.

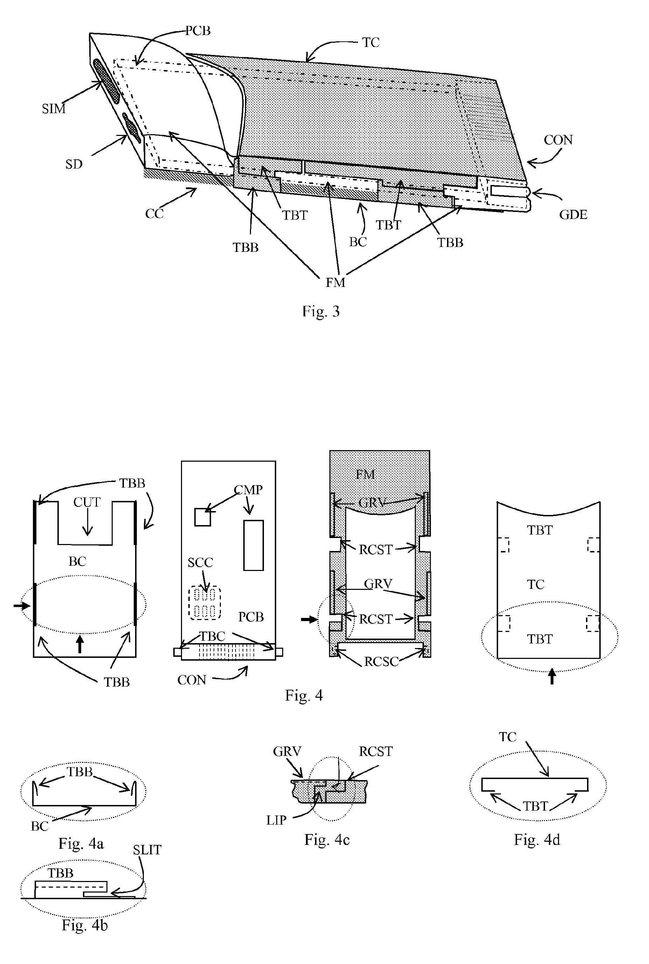

A preferred embodiment of the present invention is shown in Fig. 3. An interface device (IF) is shown comprising a housing which is compatible with the PCMCIA Standard. The housing comprises a top cover (TC) and a bottom cover (BC). The interface device further comprises a printed circuit board (PCB), which is connected to a connector panel (CON) at its bottom end. The connector panel is used to connect from the interface device to a host device. The printed circuit board and connector panel assembly are placed in a specially adapted frame (FM), which is made from a non-conductive material, preferably plastic. The frame is clipped into the bottom cover and then the top cover is placed over the bottom cover/frame/printed circuit board assembly and interlocked with bottom cover thanks to specially designed interlocking tabs in the top and bottom cases. In another embodiment where a spacer (SPC) is used, as in Fig. 2c, the procedure is as above except that the spacer is placed in the bottom cover before the printed circuit board, with its connector panel, is placed onto the bottom cover. In this embodiment, the frame extends in a longitudinal direction past the housing. The frame also extends in a vertical direction past the height if the housing since it also includes further interfaces for a SIM card and for an SD card to be connected to the interface device. In other embodiments the frame is of a simpler design, devoid of the SIM card connector and the SD card connector and therefore does not present such a large oversize with respect to the industry standard for such interfaces. As mentioned previously, according to the embodiment, the housing need not fully enclose the interface device along its entire length. The housing, and indeed at least part of the interface device, complies with the PCMCIA standard in its dimensions but the frame in this embodiment will protrude from the accommodation channel of a host device, which is not considered to be inconvenient in the domain of conditional access television for example.

According to an embodiment of the present invention, the top cover of a finally assembled interface device may be readily detached from the bottom cover manually and in a non-destructive fashion thereby allowing for the interface device to be disassembled and reassembled. The interface device is adapted such that the assembly and disassembly of the device may be achieved either manually or a tool may be used in order to increase throughput in a manufacturing environment. However, even if a tool were used to assemble the device it may still be disassembled either with a tool or manually.

Fig. 4 shows some more detail of how the various parts are assembled together and how they work in combination to provide a tight-fitting and robust housing for the interface device according to a preferred embodiment of the present invention. Preferably, the interface device thus assembled conforms to the PCMCIA standard, at least along a part of the length of the device so that the device may be connected to a host device. Fig. 4 shows the bottom cover (BC), the printed circuit board (PCB) with the connector panel (CON) attached, the frame (FM) and the top cover (TC).

The bottom cover (BC) has a set of hooked tabs (TBB). In this case it has four of them, which are placed two on either side of the top cover, symmetrically about a central axis taken in the longitudinal direction of the cover. In a preferred embodiment of the present invention the top cover is made from metal and it is a simple task to create the hooked tabs by bending appropriately shaped protruding edges up and turning the ends back down upon themselves to form hooks with the extremities of the hooks pointing back towards the bottom cover as shown in the detailed view of Fig. 4a. The hooked tabs also comprise small slits (SLIT) in the sides. These are shown in the detailed view of Fig. 4b.

Also shown in Fig. 4 is the top cover (TC), which has four flat tabs (TBT) which coincide with the slits (SLIT) of the four hooked tabs (TBB) on the bottom cover (BC). As shown in the detailed view of Fig. 4d, for a top cover made from an appropriate metallic material, these flat tabs can be readily made by vertically folding down the appropriately shaped edges of the top cover and then folding inwards again to make rectangular tabs parallel to the top cover but lying beneath the top cover. These tabs are adapted to fit into the slits in the hooked tabs of the bottom cover.

The printed circuit board (PCB) is shown in Fig.4 with a smartcard connector (SCC) and some electronic components (CMP). It is shown connected to the connector panel (CON). The connector panel has two tabs (TBC), one on either side with respect to a central longitudinal axis of the interface device.

Finally, Fig. 4 also shows the frame (FM). The frame has an area cut out at the bottom into which the connector panel (CON) can fit. It also has two connector panel recesses (RCSC) cut out on the underside of the bottom end, into which the connector panel's tabs (TBC) may fit. The frame further has four grooves (GRV) etched out on the top surface coincident with, coincident with, and suitable to receive the extremities of the hooked tabs (TBB) of the bottom cover (BC). Finally, it has four top cover tab recesses cut out (RCST) which are suitable to allow the top cover tabs to pass at least part of the way through from the top surface of the frame. As can be seen from the detailed view in Fig. 4c, the frame's top cover tab recesses further comprise a lip (LIP). This lip allows for the top cover tabs to be slid horizontally after passing through the recesses in a vertical direction so that once assembled, the top cover flat tabs lie under the lip on the frame recesses.

To assemble an interface device according to a preferred embodiment of the present invention, the printed circuit board, already connected to its connector panel, is attached to the frame by inserting the connector panel's tabs into the connector panel recesses in the frame. The frame has a profiled edge, which allows the printed circuit board to fit neatly within the profile of the underside of the frame, thus making a snug fit thanks to the tabs and the edge of the frame. The frame and printed circuit board assembly are then snapped into position on the bottom cover, preferably by pushing the printed circuit board down against the bottom cover tabs. The tabs, being made of metal and having a certain amount of resiliency, will splay out allowing the printed circuit board to pass and then, upon springing back towards their initial position, the hooked part of the tabs will hook into the grooves on the top surface of the printed circuit board. The correct position is therefore defined by the hooked tabs of the bottom cover coinciding with the grooves of the frame. With the hooks thus positioned in the grooves, a small amount of vertical movement is allowed between the frame and the bottom cover. This movement is preferable since it later will allow for a chip card to be inserted between the bottom cover and the printed circuit board. Finally the top cover is placed over the top by inserting the top cover's tabs into the top cover recesses of the frame in the vertical direction. Once the tabs are inserted, the top cover is slid horizontally until the top cover tabs slide into the slits in the bottom cover tabs. With the top cover tabs properly slid into place, a least a part of each of these tabs grip beneath the lip of the top cover recesses in the frame thereby pulling the frame in an upward direction away from the bottom cover and so making a space or slot (SLT) for a chip card to be inserted, while at the same time causing the hooks of the bottom cover's hooked tabs to be pushed more firmly into the grooves thus creating a very compact and snuggly fitting housing.

Once assembled in the manner described above, the interface device may be readily disassembled and reassembled as required. None of the components are degraded by the disassembly and/or reassembly process, which may be readily carried out manually or may be automated using appropriately adapted tools. Disassembly may thus be achieved even after final assembly of an interface device comprising a conditional access module even if the device is ready to be shipped from the factory or already in operation at a user's premises.

In an embodiment of the present invention, the bottom cover has a piece cut away (CUT). The purpose of this is to allow an identifying sticker attached to the printed circuit board to be visible when the interface device is assembled. This sticker is used for tracking purposes during manufacturing. It has a further use once the chip card is inserted between the printed circuit board and the bottom cover as it allows the card to be visible while the interface device is being used. Suppliers of chip cards or suppliers of the conditional access module often like to display their company logo on the chip card. Having the piece cut away allows this goal to be achieved.

In another embodiment of the present invention, a spacer with conductive strips is inserted between the bottom cover and the printed circuit board/frame assembly. An example of an interface device which requires such a spacer is shown in fig. 2c. Preferably, the bottom cover has a small depression to allow extra space for the spacer to sit.

It is to be understood that terms top cover and bottom cover as far as they are used throughout this description are interchangeable. Consequently, different permutations are possible such as for example having the slotted tabs on the top cover and the other type of tabs on the bottom cover is also a possibility in an embodiment of the present invention. Similarly, the top cover may appear below the printed circuit board and the bottom cover above the printed circuit board is also possible, as is having the grooves on the bottom face of the frame instead of the top etc.

In all of the embodiments of the present invention, the housing is not permanently sealed. No glue, solder or welded joint is required and the top cover is held to the bottom cover simply by the top cover tabs sliding into the slits of the hooked tabs.

The present invention takes advantage of the fact that nowadays the high level of security designed into a CAM is now focused on the software and the system design and it is no longer easy for a malicious third party to break the security simply by having access to the hardware. In spite of the historical tendency to build sealed units to house CAMs, it is thought that there is no longer any benefit achieved by the malicious third party being able to access the hardware and so it is now of benefit from a manufacturing point of view to leave the hardware accessible since having access does not advantage the malicious third party.

## Claims

1. A method for assembling a housing (H) for an interface device (IF) comprising a conditional access module, the conditional access module being suitable for performing secure operations, said method using a top cover (TC) and a bottom cover (BC), said bottom cover (BC) comprising at least two bottom cover tabs (TBB), said top cover (TC) comprising at least two top cover tabs (TBT) adapted to interlock with the bottom cover tabs (TBB), said method comprising:
interlocking the top cover tabs (TBT) with the bottom cover tabs (TBB) using a sliding action of the top cover tabs (TBT) into the slits (SLIT) of the bottom cover tabs (TBB) to assemble the housing (H).

2. The method according to claim 1, wherein either the top cover tabs (TBT) or the bottom cover tabs (TBB) comprise at least one slit to facilitate said interlocking by sliding.

3. The method according to claim 1, wherein each of said bottom cover tabs (TBB) further comprises at least one hook, and wherein said interface device (IF) comprises a frame (FM) with a plurality of grooves (GRV) adapted to receive the hooks of the bottom cover tabs (TBB) and a plurality of recesses (RCST) adapted to allow the top cover tabs (TBT) to pass, each of said recesses (RCST) comprising a lip (LIP) adapted to allow the top cover tabs (TBT) to slide underneath, said frame (FM) further comprising a printed circuit board (PCB), said method further comprising:
hooking the bottom cover tabs (TBB) into the grooves (GRV); and
pulling the frame (FM) against the grooves (GRV) and sliding the top cover tables (TBT) under the lips (LIP) using the sliding action of the top cover (TC).

4. The method according to claim 1, wherein the housing (H) complies with a PCMCIA Standard.

5. A method for non-destructively disassembling the housing (H) of either of claims 1 or 3, said top cover tabs (TBT) being interlocked with the bottom cover tabs (TBB), said method comprising:
detaching the top cover tabs (TBT) from the bottom cover tabs (TBB) using a sliding action of the top cover tabs (TBT) away from the bottom cover tabs (TBB).

6. The method according to claim 5, said method further comprising:
sliding the top cover tabs (TBT) out from the slits (SLIT) and out from under the lips (LIP); and
unhooking the bottom cover tabs (TBB) from the grooves (GRV) of the frame (FM).

7. The method according to either of claims 5 or 6, wherein the housing (H) complies with a PCMCIA Standard.

8. A housing (H) for a conditional access module, the conditional access module being suitable for performing secure operations, said housing (H) comprising a top cover (TC) and a bottom cover (BC), said housing (H) **characterised in that**:
the top cover (TC) comprises at least two top cover tabs (TBT) distributed evenly on opposite edges of the top cover (TC), said top cover tabs (TBT) having a first section substantially perpendicular to a plane of the top cover (TC) and a second section substantially perpendicular to the first section of the top cover tabs (TBT) and lying beneath the top cover (TC), and **in that**:
the bottom cover (BC) comprises at least two hooked tabs (TBB) corresponding to the top cover tabs (TBT), said hooked tabs (TBB) having a first section and a second section, said first section being substantially perpendicular to the bottom cover (BC), said second section forming a hook, an extremity of the hook facing the bottom cover (BC), said hooked tabs (TBB) each having at least one slit (SLIT) in the first section,
said top cover tabs (TBT) being interlocked into the slits (SLIT) in the hooked tabs (TBB),
said housing (H) further **characterised in that** the top cover (TC) and the bottom cover (BC) are adapted to allow them to disassembled from each other in a non-destructive manner.

9. The housing (H) according to claim 8, wherein said housing (H) is further **characterised in that** the top cover (TC) and the bottom cover (BC) are adapted to be manually disassembled from each other.

10. The housing according to claim 9, wherein said top cover tabs (TBT) are adapted to slide out of the slits (SLIT) in the hooked tabs (TBB).

11. The housing (H) according to any of claims 8 to 10, wherein it complies with a PCMCIA Standard.

12. The housing (H) according to any of claims 8 to 11, wherein said top cover tabs (TBT) are four in number.

13. An interface device (IF) comprising the housing (H) according to any of claims 8 to 12, said interface device (IF) further comprising:
a frame (FM);
a printed circuit board (PCB); and
a connector panel (CON),
said connector panel (CON) being adapted to provide an interface between the printed circuit board (PCB) and a host device,
said interface device (IF) **characterised in that**:
the frame (FM) comprises:
at least two grooves (GRV), a first groove (GRV) corresponding to a first of said two hooked tabs (TBB), a second groove (GRV) corresponding to a second of said two hooked tabs (TBB) said grooves adapted to fit into the hooked tabs (TBB), and
at least two lips (LIP), a first lip (LIP) corresponding to the first groove (GRV), a second lip (LIP) corresponding to the second groove (GRV),
said lips (LIP) being adapted such that said top cover tabs (TBT)
may slide underneath said lips (LIP),
and **in that**:
said printed circuit board (PCB) fits beneath the frame (FM); and
said frame (FM) is held within the housing (H) by a combined action of the extremities of the hooked tabs (TBB) pulling in a first direction on the grooves (GRV) of the frame (FM) and the top cover tabs (TBB) pulling in a second direction, substantially opposite to the first direction, on the lips (LIP) of the frame (FM).
